# EUROPÄISCHE PATENTSCHRIFT

(11) **EP 0 546 307 B1**
(45) Veröffentlichungstag und Bekanntmachung des Hinweises auf die Patenterteilung: **01.03.1995**
(21) Anmeldenummer: 92118650.8
(22) Anmeldetag: 31.10.1992
(51) Int. Cl.: B60B 3/06

(54) **Leichtmetallrad für ein Kraftfahrzeug**
Light alloy wheel for motor vehicle
Roue d'alliage léger pour véhicule à moteur

(30) Priorität: 12.12.1991 DE 4141464
(43) Veröffentlichungstag der Anmeldung: 16.06.1993
(73) Patentinhaber: Dr.Ing.h.c. F. Porsche Aktiengesellschaft, 70435 Stuttgart (DE)
(72) Erfinder: Lippmann, Johannes, W-7253 Renningen (DE); Stach, Jens, W-7251 Weil der Stadt (DE)

(56) Entgegenhaltungen:
- EP-A- 0 027 272
- DE-A- 2 063 379
- US-A- 4 165 131
- US-A- 4 861 113

## Beschreibung

Die Erfindung bezieht sich auf Leichtmetallrad für ein Kraftfahrzeug nach dem bekannten Oberbegriff des Anspruchs 1.

Aus der DE-A-2 063 379 ist ein einstückiges Kraftfahrzeugrad bekannt, das ein mit einer Felgenschüssel verbundenes Felgenbett umfaßt und an dem an der Innenseite der Felgenschüssel sternförmig angeordnete Verstärkungsrippen vorgesehen sind, die in Ansätzen für Bohrungen für Befestigungsschrauben auslaufen. Ein derartiges Kraftfahrzeugrad ist aufgrund der mit einer relativ dicken Wand ausgebildeten Felgenschüssel sowie der angeformten Rippen relativ schwer von Gewicht und benachbart der Luftöffnungen liegende Bereiche sind festigkeitsmäßig so stark ausgebildet, daß die Öffnungen keine Schwächung der Radfelge an sich bewirken können.

Aufgabe der Erfindung ist es, ein Leichtmetallrad zu schaffen, das gewichtsmäßig leicht ausgeführt ist und trotzdem eine große Belastbarkeit gewahrleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Rückseite, d.h. die Innenseite des Rades mit Rippen an den Luftöffnungen und zwischen diesen so gestaltet ist, daß mit geringstmöglichem Gewicht eine größtmögliche Festigkeit erzielt wird.

Dies wird erreicht, indem zwischen den Rippen und den Luftöffnungen sowie im Bereich um die Nabe zwischen den Bohrungen für die Befestigungsschrauben tiefer gelegene Flächenbereiche vorgesehen sind, die etwa alle eine gleiche Dicke aufweisen.

Zur Verstärkung der jeweils zwischen zwei Luftöffnungen liegende Bereiche des Rades, sind diese im Querschnitt als T-förmiges Profil ausgeführt. Dieses Profil weist eine Rippe mit etwa quadratischem Querschnitt auf; der Flansch erstreckt sich außen- und innenseitig bogenförmig zur Rippe und stellt außenseitig zwischen den Luftöffnungen die Gesamtrippe dar. An den freien Enden des Flansches sind nach innen hochgestellte Ränder vorgesehen, die endseitig verdickt durch eine Abrundung sind. Diese Abrundung setzt sich aus zwei Radien zusammen, die im von außen sichtbaren Bereich des Rades aneinander treffen und eine umlaufende Kante bilden. Diese Kante wird in einem dem Gießvorgang nachfolgenden Arbeitsvorgang so weit geglättet, daß die Radien ineinander fließen und ein gerundeter Übergang entsteht.

Ein Ausführungsbeispiel der Erfindung ist in der Zeichnung dargestellt und wird im folgenden näher beschrieben:

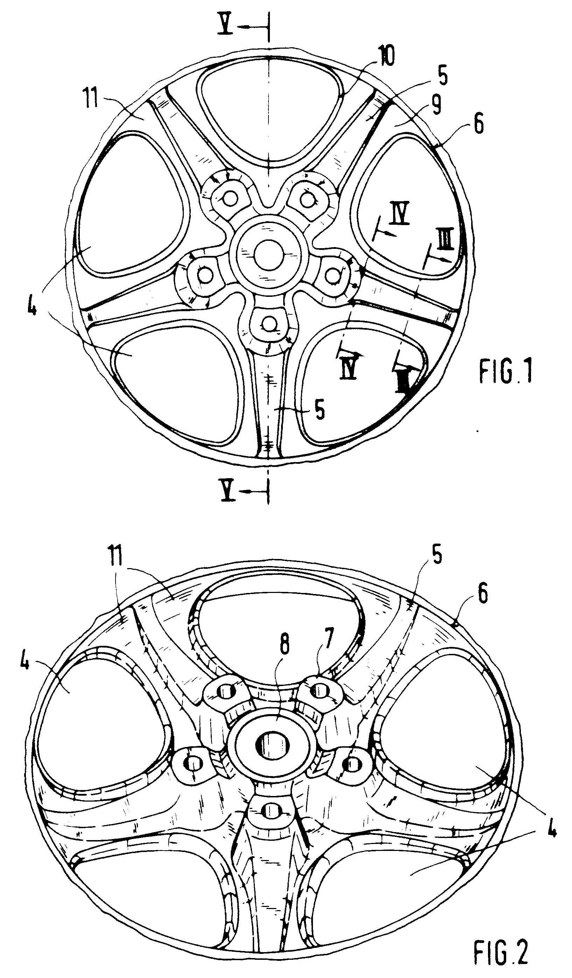

Es zeigt
- Fig. 1: eine Innenansicht eines Rades mit Rippen,
- Fig. 2: eine schaubildliche Schrägdarstellung des Rades,
- Fig. 3: einen Schnitt nach der Linie III-III der Fig. 1,
- Fig. 4: einen Schnitt nach der Linie IV-IV der Fig. 1 und
- Fig. 5: einen Schnitt nach der Linie V-V der Fig. 1.

Das Leichtmetallrad 1 ist einteilig und umfaßt ein mit einer Felgenschüssel 2 verbundenes Felgenbett 3. Die Felgenschüssel 2 weist mehrere dreieckförmige Luftöffnungen 4 auf, zwischen denen jeweils eine Rippe 5 vom Rand 6 bis zu einem Ansatz 7 verläuft, der mit der Nabe 8 verbunden ist.

Die Luftöffnungen 4 durchdringen die Felgenschüssel 2 und weisen von der Innenfläche 9 aus nach innen hochgestellte Ränder 10 auf, die jede Luftöffnung 4 umgeben. Zwischen zwei unmittelbar benachbarten Luftöffnungen 4 sind jeweils sternförmig vom Rand 6 zur Nabe 8 die verlaufenden Rippen 5 angeordnet, welche etwa die Höhe der Ränder 10 aufweisen. Die Rippen 5 sind beabstandet zum Rand 10 der Öffnung 4 vorgesehen und über einen Zwischenraum 11 getrennt, der seinen Grund auf der Innenfläche 9 besitzt. Diese Innenfläche 9 verläuft in etwa parallel zur Außenfläche 12 des Rades 1, die an der Radaußenseite einen bogenförmigen Formverlauf aufweist und zwischen den Luftöffnungen 4 jeweils die von außen sichtbare Gesamtrippe bildet.

Die Innenfläche 9 erstreckt sich über die gesamte Innenseite des Rades 1, d.h. auch zwischen den Ansätzen 7 bis zur Habe 8, so daß bis auf die Rippen 5, Ansätze 7 und die Nabe 8 eine annähernd gleichbleibende Dicke der Felgenschüssel 2 gewährleistet ist und somit die Felge von relativ kleinem Gewicht ist, wobei die besonders beanspruchten Bereiche des Rades verstärkt sind.

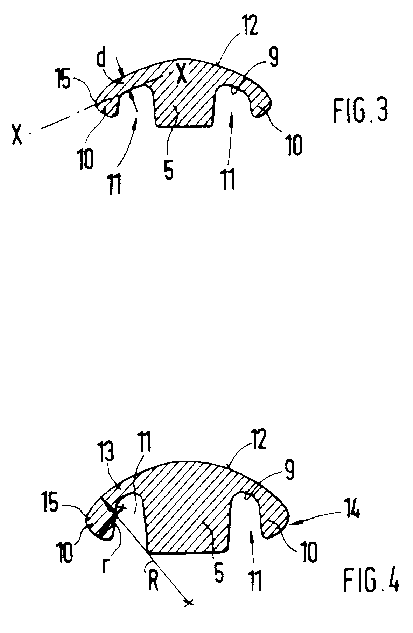

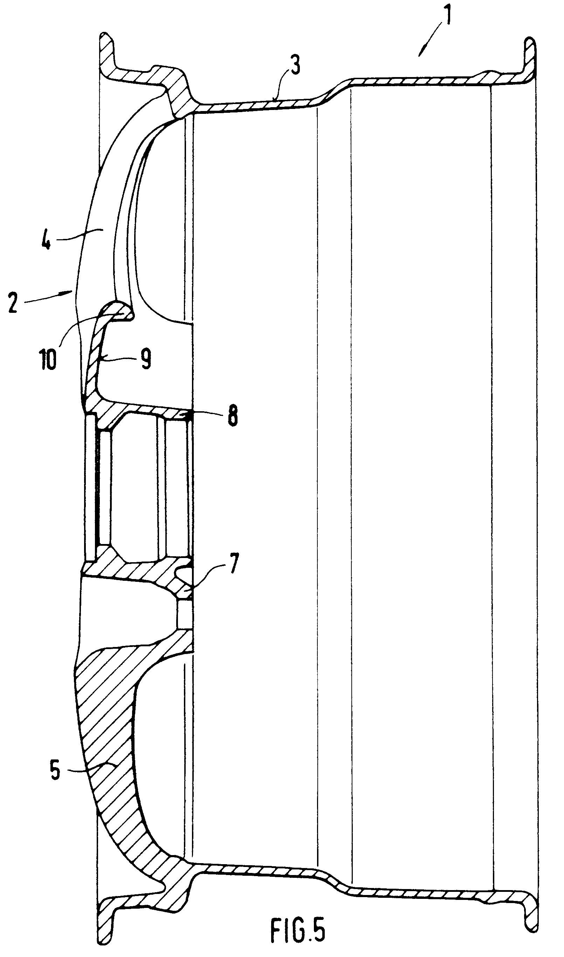

Die Rippe 5 ist, wie die Fig. 3 und 5 näher zeigen, nahezu im Querschnitt quadratisch ausgeführt, wobei der Querschnitt zur Radmitte hin zunimmt und im Ansatz 7 ausläuft.

Zur Verstärkung des Bereichs zwischen zwei Luftöffnungen 4, ist diese im Querschnitt unter Einbeziehung der Rippe 5 als T-Profil ausgeführt, wobei der Flansch 13 dann endseitig an seinen freien Enden die hochgestellten Ränder 10 aufweist.

Diese sind außenseitig mit einer Abrundung 14 versehen, welche sich aus einem großen äußeren Radius R und einem kleineren inneren Radius r zusammensetzt. Im zusammentreffenden Bereich bildet sich bei der Herstellung eine umlaufende Kante 15 in der Abrundung 14, die durch einen Arbeitsvorgang geglättet wird, so daß ein fließender Übergang geschaffen wird.

## Patentansprüche

1. Leichtmetallrad für ein Kraftfahrzeug, das ein mit einer Felgenschüssel (2) einteilig gegossenes Felgenbett umfaßt, wobei die Felgenschüssel (2) an der Innenseite zwischen Luftöffnungen (4) sternförmig angeordnete Rippen (5) aufweist, die in einen verdickten Mittenbereich des Rades einmünden, in dem mehrere um eine zentrische Aufnahme für einen Radzapfen angeordnete Bohrungen in Ansätzen (7) für Befestigungsschrauben vorgesehen sind, **dadurch gekennzeichnet**, daß die Luftöffnungen (4) an der Innenfläche (9) der Felge (2) einen hochgestellten Rand (10) aufweisen, der zu einer zwischen jeweils zwei Öffnungen (4) angeordneten erhabenen Rippe (5) sowie der Nabe (8) mit verbundenen Ansätzen (7) durch einen Zwischenraum (11) beabstandet ist, und dieser Raum (11) einen tieferliegenden Grund (Innenfläche 9) aufweist, der sich freiliegend um die Öffnungen (4) herum erstreckt und eine etwa gleiche Wanddicke (d) der Felgenschüssel (2) ergibt.

2. Leichtmetallrad nach Anspruch 1, **dadurch gekennzeichnet**, daß der Querschnitt der Felgenschüssel (2) zwischen zwei unmittelbar benachbarten Luftöffnungen (4) ein etwa T-förmiges Profil ergibt, wobei die Rippe (5) im Querschnitt etwa quadratisch ist und der Flansch (13) einen äußeren bogenförmigen Verlauf aufweist, zu dem parallel die Innenfläche (9) verläuft.

3. Leichtmetallrad nach den Ansprüchen 1 und 2, **dadurch gekennzeichnet**, daß der Flansch (13) an seinen beiden freien Enden die hochgestellten Ränder (10) aufweist, welche außenseitig eine Abrundung (14) besitzen.

4. Leichtmetallrad nach Anspruch 3, **dadurch gekennzeichnet**, daß die Abrundung (14) sich aus einem äußeren großen Radius (R) und einem kleineren inneren Radius (r) zusammensetzt, die im zusammentreffenden Bereich eine umlaufende Kante (15) in der Abrundung (14) bilden.

5. Leichtmetallrad nach Anspruch 4, **dadurch gekennzeichnet**, daß die umlaufende Kante sich etwa in der Ebene (X-X) der Innenfläche (9) der Felgenschüssel (2) erstreckt.

6. Leichtmetallrad nach den Ansprüchen 1 und 4, **dadurch gekennzeichnet**, daß die umlaufende Kante (15) geglättet ist und die Abrundung (14) mit großem und kleinem Radius (R, r) fließend ineinander übergehen.

## Claims

1. A light-alloy wheel for a motor vehicle, comprising a rim base cast integrally with a rim dish (2), the rim dish (2) being provided on the inside with ribs (5) disposed in a stellar arrangement between air openings (4) and opening into a thickened central region of the wheel, in which a plurality of bores arranged around a central receiving means for a wheel spindle are provided in attachments (7) for fastening bolts, **characterized in that** the air openings (4) on the inner face (9) of the rim (2) have a raised edge (10) situated at a distance by an interspace (11) from a projecting rib (5) arranged between two respective openings (4) as well as from the hub (8) with associated attachments (7), and the said space (11) has a base (inner face 9) situated at a lower level and extending freely around the openings (4) and resulting in a substantially equal wall thickness (**d**) of the rim dish (2).

2. A light-alloy wheel according to Claim 1, **characterized in that** the cross-section of the rim dish (2) between two immediately adjacent air openings (4) has a substantially T-shaped profile, the rib (5) being substantially square in cross-section and the flange (13) having a curved outer shape, parallel to which the inner face (9) extends.

3. A light-alloy wheel according to Claims 1 and 2 **characterized in that** the flange (13) is provided at the two free ends thereof with the raised edges (10) which have a rounded shape (14) on the outside.

4. A light-alloy wheel according to Claim 3, **characterized in that** the rounded shape (14) is formed by an outer large radius (**R**) and an inner smaller radius (**r**) which in the coincident area form a continuous edge (15) in the rounded shape (14).

5. A light-alloy wheel according to Claim 4, **characterized in that** the continuous edge (15) extends substantially in the plane (**X-X**) of the inner face (9) of the rim dish (2).

6. A light-alloy wheel according to Claims 1 and 4, **characterized in that** the continuous edge (15) is made smooth and the large and the small radii (**R**, **r**) [of] the rounded shape (14) pass smoothly into each other.

## Revendications

1. Roue en alliage léger pour un véhicule automobile, qui comporte une base de jante coulée d'une seule pièce avec une cuvette de jante (2), la cuvette de jante (2) présentant sur le côté intérieur des nervures (5) placées en étoile entre des orifices d'air, lesquelles nervures débouchent dans une zone centrale surépaissie de la roue, dans laquelle des trous, disposés autour d'un logement central d'un axe de roue, sont prévus dans des appendices (7) pour des vis de fixation, caractérisée en ce que les orifices d'air (4) présentent sur la surface intérieure (9) de la jante (2) un bord (10) relevé, qui, par un espace intermédiaire (11), est écarté d'une nervure (5) en relief, placée entre deux orifices (4) ainsi que du moyeu (8) avec des appendices (7) reliés, et cet espace intermédiaire (11) présente un fond (surface intérieure 9) située plus bas, qui s'étend librement autour des orifices (4) et donne une épaisseur de paroi (d) à peu près égale de la cuvette de jante (2).

2. Roue en alliage léger selon la revendication 1, caractérisée en ce que la section transversale de la cuvette de jante (2) donne entre deux orifices d'air (4) directement voisins, un profil à peu près en T, la nervure (5) ayant une section transversale à peu près carrée et la bride (13) ayant un parcours extérieur en arc auquel la surface intérieure (9) est parallèle.

3. Roue en alliage léger selon les revendications 1 et 2, caractérisée en ce que la bride (13) présente à ses deux extrémités libres les bords (10) relevés, qui présentent extérieurement un arrondi (14).

4. Roue en alliage léger selon la revendication 3, caractérisée en ce que l'arrondi (4) se compose d'un grand rayon (R) extérieur et d'un rayon intérieur (r), qui dans la zone de réunion forment un bord (15) continu dans l'arrondi (14).

5. Roue en alliage léger selon la revendication 4, caractérisée en ce que le bord continu s'étend à peu près dans le plan (X-X) de la surface intérieure (9) de la cuvette de jante (2).

6. Roue en alliage léger selon les revendications 1 et 4, caractérisée en ce que le bord (15) continu est lissé et l'arrondi (14) de grand diamètre (R) et l'arrondi (14) de petit diamètre (r) se fondent l'un dans l'autre.
